# EUROPÄISCHE PATENTANMELDUNG

(11) **EP 2 277 646 A2**
(43) Veröffentlichungstag der Anmeldung: **26.01.2011**
(21) Anmeldenummer: 10007662.9
(22) Anmeldetag: 23.07.2010
(51) Int. Cl.: B23B 31/16, B25J 15/10

(54) **Vorrichtung zum Spannen von Werkstücken zur Huberweiterung für ein bestehendes Spannfutter einer Maschine**

(30) Priorität: 24.07.2009 DE 102009034729; 24.07.2009 DE 102009034728
(71) Anmelder: Pirker, Arnold, 88361 Altshausen (DE)
(72) Erfinder: Pirker, Arnold, 88361 Altshausen (DE)
(74) Vertreter: Otten, Herbert

(57) **Zusammenfassung**

Die Erfindung geht von einer Vorrichtung (1) zum Spannen von Werkstücken zur Huberweiterung für ein bestehendes Spannfutter (2) auf einer Maschine aus, umfassend ein Gehäuse (4, 4A) zur Anordnung eines Getriebes, und mindestens zwei Spannmittel (14), die mittels des Getriebes eine lineare, auf einen Mittelpunkt gerichtete Bewegung ausführen.

Erfindungsgemäß umfasst die Vorrichtung (1) eine erste Außenebene (18, 18A) außerhalb des Gehäuses (4, 4A) und eine erste und zweite Innenebene (19, 19A, 20, 20A) innerhalb des Gehäuses (4, 4A), wobei in der ersten Außenebene (18, 18A) mindestens zwei Spannmittelschlitten (13) vorgesehen sind, welche eine Verzahnung oder ein Gewinde aufweisen und in die erste Innenebene (19, 19A) hineinragen, und welche in der ersten Innenebene (19, 19A) mit jeweils mindestens einem angeordneten Zahnhebel (12) oder einer Gewindestange (26) im Eingriff stehen, wobei der mindestens eine Zahnhebel (12) oder die Gewindestange (26) wiederum mit jeweils einer Zahnradwelle (11) oder einem Zahnkranz (29) in der zweiten, darunter liegenden Innenebene (20, 20A) im Eingriff steht, und wobei eine Betätigung der Zahnradwelle (11) oder des Zahnkranzes (29) zur Bewegung der Spannmittel (14) in der zweiten Innenebene (20A) mittels mindestens eines Aktuators erfolgt.

## Beschreibung

Die Erfindung betrifft eine Vorrichtung zum Spannen von Werkstücken zur Huberweiterung für ein bestehendes Spannfutter einer Maschine nach dem Oberbegriff des Anspruches 1.

### Stand der Technik

Vorrichtungen zum zentrischen Spannen bzw. zum zentrischen Greifen von Werkstücken, beispielsweise das Spannen eines rotationssymmetrischen Werkstücks auf einer Drehmaschine bzw. das Greifen eines Werkstücks von einem Industrieroboter sind in einer Vielzahl unterschiedlicher Ausführungsformen bekannt.

Dabei erfolgt der Greif- bzw. Spannvorgang durch eine lineare Verschiebung der Greif- bzw. Spannbacken in der Vorrichtung.

Beispielsweise beansprucht die Druckschrift DE 36 27 918 A1 einen zentrisch greifenden Dreifingergreifer, welcher ein in einem Gehäuse angeordnetes Getriebe umfasst, wobei eine in einem Führungskanal verschiebbare Greifbacke mittels einer Kolben-Zylinder-Einheit angetrieben wird und über eine seitlich angeordnete Linearverzahnung mit einem Zahnrad in Verbindung steht, wobei das Zahnrad jeweils ein weiteres Zahnrad an der zweiten und dritten Greifbacke drehend antreibt und dadurch die beiden Greifbacken linear verschiebt.

Nachteilig bei dieser Ausführungsform einer Greifvorrichtung ist, dass der Greifbereich der Greifbacken aufgrund der verwendeten Bewegungsmechanik nicht dazu ausgelegt ist, Werkstücke mit großen bzw. kleinen Durchmessern mit einer einzigen Vorrichtung zu greifen.

Liegt der Durchmesser eines zu greifenden Werkstücks zum Beispiel über dem maximalen Greifbereich der eingesetzten Greifbacken, kann das Werkstück lediglich durch einen zeitaufwendigen Wechsel der Greifbacken mit einem größeren Greifbereich oder durch den Austausch der gesamten Vorrichtung aufgenommen werden.

Aufgabe der Erfindung ist es somit, eine Vorrichtung zum Greifen bzw. Spannen von Werkstücken derart weiterzubilden, dass die Rüstzeit beim Spannen von unterschiedlichen Werkstücken mit großen und kleinen Durchmessern vermindert wird.

Diese Aufgabe wird, ausgehend vom Oberbegriff des Anspruchs 1 durch die kennzeichnenden Merkmale des Anspruches 1 gelöst.

Vorteilhafte Weiterbildungen sowie zweckmäßige Ausgestaltungen sind in den abhängigen Ansprüchen angegeben.

### Beschreibung der Erfindung

Die erfindungsgemäße Vorrichtung zum Spannen von Werkstücken zur Huberweiterung für ein bestehendes Spannfutter einer Maschine umfasst ein Gehäuse zur Anordnung eines Getriebes und mindestens zwei Spannmitteln, die mittels des Getriebes eine lineare, auf einen Mittelpunkt gerichtete Bewegung ausführen.

Es können Werkstücke, vorzugsweise rotationssymmetrische Werkstücke zentrisch gespannt werden, wobei die Spannmittel beim Öffnen und Schließen eine synchrone Linearbewegung ausführen.

Der Kern der Erfindung liegt darin, dass die Vorrichtung eine erste Außenebene außerhalb des Gehäuses und eine erste und zweite Innenebene innerhalb des Gehäuses umfasst, wobei in der ersten Außenebene mindestens zwei Spannmittelschlitten vorgesehen sind, welche eine Verzahnung oder ein Gewinde aufweisen und in die erste Innenebene hineinragen und welche in der ersten Innenebene mit jeweils mindestens einem angeordneten Zahnhebel oder einer Gewindestange im Eingriff stehen, wobei der mindestens eine Zahnhebel oder die Gewindestange wiederum mit jeweils einem Zahnrad oder einem Zahnkranz in der zweiten, darunter liegenden Innenebene im Eingriff steht und wobei eine Betätigung des Zahnrades oder Zahnkranzes in der zweiten Innenebene zur Bewegung der Spannmittel mittels mindestens eines Aktuators erfolgt.

Mit der erfindungsgemäßen Vorrichtung können Werkstücke mit kleinen sowie mit großen, beispielsweisen über den maximalen Spanndurchmesser herkömmlicher Spannvorrichtungen hinausgehende Durchmessern gespannt werden, wodurch ein Umrüsten bzw. ein Austausch der Spannmittel oder der gesamten Vorrichtung entfällt.

In einer bevorzugten Ausgestaltung der Erfindung ist es vorgesehen, dass das Gehäuse Durchbrüche auf der Rückseite in Richtung des bestehenden Spannfutters, insbesondere zur Betätigung des mindestens einen Aktuators aufweist, wobei vorzugsweise die Durchbrüche für eine Aufnahme einer linearen Bewegung des bestehenden Spannfutters vorgesehen sind.

Das Gehäuse kann mit der Unterseite des Gehäuses auf einem bestehenden Spannfutter einer Maschine befestigt werden, wobei die Anzahl der Durchbrüche auf die Anzahl der vorhandenen Spannbacken des bestehenden Spannfutters angepasst ist. Dadurch kann der Aktuator der erfindungsgemäßen Vorrichtung direkt mit einer Spannfutterbacke des bestehenden Spannfutters verbunden werden, wodurch die lineare Bewegung der Spannfutterbacke direkt auf den Aktuator übertragen wird.

In einer überdies bevorzugten Ausgestaltung der Erfindung ist es vorgesehen, dass der Aktuator als Doppelzahnschieber und/oder als Drehring ausgebildet ist. Der mit den Spannfutterbacken des vorhandenen Spannfutters verbundene Doppelzahnschieber weist an seinen Enden jeweils eine Linearverzahnung auf, welche im Eingriff mit jeweils einer Zahnradwelle stehen. Der Bewegungsablauf des Doppelzahnschiebers in Verbindung mit der Zahnradwelle erfolgt in einer ersten Innenebene des Gehäuses. Der als Drehring ausgebildete Aktuator steht im Eingriff mit jeweils einem an einer Gewindestange angeordneten Zahnrad, wodurch eine Bewegung des Spannmittelschlittens ausgeführt wird.. Die Bewegung des Zahnkranzes erfolgt in einer ersten Innenebene, wobei die Bewegung des mit dem Zahnkranz im Eingriff stehenden Zahnrades in einer zweiten Innenebene des Gehäuses erfolgt.

Es ist in einer überdies bevorzugten Ausgestaltung der Erfindung vorgesehen, dass der Doppelzahnschieber eine lineare Bewegung ausführt und die Zahnradwelle, vorzugsweise zwei Zahnradwellen dreht, wobei jede Zahnradwelle drehfest mit einem Zahnhebel an einem Drehpunkt verbunden ist und diesen schwenkt. Durch eine lineare Bewegung der Spannfutterbacken des vorhandenen Spannfutters führt der Doppelzahnschieber ebenfalls eine lineare Bewegung in gleicher Richtung aus, die über die seitlich mit der Linearverzahnung im Eingriff stehenden Zahnradwellen in eine Drehbewegung gewandelt wird. Auf Grund der Drehbewegung der Zahnradwelle wird der Zahnhebel um seine Drehachse verschwenkt.

Es ist in einer weiteren Ausgestaltung der Erfindung vorgesehen, dass der als Linearschlitten ausgebildete Spannmittelschlitten eine Linearverzahnung umfasst, welche mit einer an dem Zahnhebel angeordneten, einem Drehpunkt gegenüberliegenden Verzahnung, vorzugsweise mit zwei Zahnhebeln symmetrisch im Eingriff steht. Vorzugsweise weist der Spannmittelschlitten zwei sich gegenüberliegende Linearverzahnungen auf, welche den Eingriff von zwei Zahnhebeln vorsehen. Dies hat den Vorteil, dass der Linearspannschlitten präzise geführt werden kann.

Überdies ist es in einer weiteren Ausgestaltung der Erfindung vorgesehen, dass das Spannmittel zur Ausübung einer Spannkraft auf ein zu haltendes Teil am Spannmittelschlitten angeordnet ist. Der Spannmittelschlitten kann unterschiedliche Ausführungsformen aufweisen, wobei die Spannmittel zur Ausführung einer Spannkraft auf ein zu haltendes Werkstück bzw. an den zu spannenden Durchmesser des Werkstückes sowie an die Form des Werkstückes angepasst werden können.

Es ist in einer weiteren Ausgestaltung der Erfindung vorgesehen, dass die Vorrichtung an ein bestehendes Spannfutter anbaubar bzw. in die bestehende Spannmechanik integrierbar ist. Die für die Vorrichtung erforderliche Bewegungsmechanik (Getriebe) kann in einem separaten Gehäuse angeordnet werden, welches an einem bestehenden Spannfutter befestigt werden kann. Die Integration der erforderlichen Bewegungsmechanik (Getriebe) zum Spannen von Werkstücken in ein vorhandenes Spannfutter ist ebenfalls möglich. Die integrierte Ausführungsform der Vorrichtung vermindert die Größe und das Gewicht gegenüber der Ausführungsform eines separaten Gehäuses. Des Weiteren ist es von Vorteil, dass eine auf einem bestehenden Spannfutter befestigte Vorrichtung von diesem betätigt werden kann, wodurch eine separate Betätigung der erfindungsgemäßen Vorrichtung entfällt.

Darüber hinaus ist es in einer weitere Ausführungsform der Erfindung vorgesehen, dass die Vorrichtung eine Grundplatte umfasst, auf welcher der außen laufende Zahnkranz drehbar angeordnet ist. Die Grundplatte ist auf dem bestehenden Spannfutter befestigt, wobei der drehbar angeordnete Zahnkranz mit dem als Aktuator ausgebildeten Drehring verbunden ist. Durch ein manuelles Drehen des Drehrings können über die in den jeweiligen Ebenen angeordneten Bewegungselemente die Spannmittelschlitten linear bewegt werden.

In einer über dies bevorzugten Ausgestaltung der Erfindung ist vorgesehen, dass der Spannmittelschlitten mit der Gewindestange in der ersten Innenebene einen Schneckenantrieb bildet, wobei das Ende der Gewindestange mit einem Zahnrad drehfest verbunden ist, welches mit dem Zahnkranz in der zweiten Innenebene im Eingriff steht. Ausgehend von dem Zahnkranz wird eine Drehbewegung in der zweiten Innenebene in eine Drehbewegung in der ersten Innenebene des Gehäuses gewandelt, welche wiederum in eine Linearbewegung der Spannmittelschlitten in der ersten Außenebene gewandelt wird. Vorteil ist, dass die Vorrichtung mit klein bauenden Abmessungen durch manuelles Drehen des Drehrings eine Linearbewegung der Spannmittelschlitten ausführt, um Werkstücke innerhalb eines großen Durchmesserbereiches zu spannen.

In einer überdies bevorzugten Ausgestaltung der Erfindung ist vorgesehen, dass eine Bewegung des Doppelzahnschiebers um eine Strecke A eine vergrößerte Bewegung des Spannmittels um eine Strecke B>A erzeugt. Die seitlich an den Doppelzahnschieber eingreifende Zahnradwelle erzeugt über den Zahnhebel mit dem vom Drehpunkt entfernt angeordneten Zahnradsegment eine Drehbewegung, die aufgrund der Übersetzung eine vergrößerte Linearbewegung der Spannmittel erzeugt.

Es ist in einer weiteren Ausgestaltung der Erfindung vorgesehen, dass der Drehring mittels eines Antriebes oder manuell drehbar ist und eine Linearbewegung der Spannmittelschlitten erzeugt. Der Drehring kann von Außen manuell verdreht werden, wodurch über die entsprechend angeordneten Bewegungselemente in den jeweiligen Ebenen der Spannmittelschlitten verschiebbar ist. Der Drehring ist ebenfalls durch einen Antrieb, beispielsweise ein Linearmotor mit Wegmesssystem drehbar anzutreiben, wobei der Antrieb innerhalb des Gehäuses der Vorrichtung angeordnet sein kann.

Überdies ist es in einer weiteren Ausgestaltung der Erfindung vorgesehen, dass eine Bewegung des Drehrings um eine Drehstrecke C eine Bewegung des Spannmittels um eine Linearstrecke D erzeugt, wobei je nach Ganghöhe der Gewindestange eine Untersetzung C>D bzw. Übersetzung D>C erfolgt. Das Maß der Ganghöhe kann an die jeweilige Spannaufgabe angepasst werden, wobei eine Gewindestange mit einer großen Ganghöhe eine schnelle Linearbewegung der Spannmittelschlitten ausführt. Eine Gewindestange mit geringer Ganghöhe hat den Vorteil, dass ein feinfühliges Bewegen bzw.

Spannen der Spannmittel möglich ist.

Weitere Merkmale der Erfindung gehen aus der nachfolgenden Figurenbeschreibung der Ausführungsbeispiele und den Zeichnungen hervor.

Dabei zeigen:
- Figur 1:: eine perspektivische Ansicht einer erfindungsgemäßen Vorrichtung mit Doppelzahnschieber als Aktuator;
- Figur 2:: eine Seitenansicht der Vorrichtung nach Figur 1;
- Figur 3:: eine perspektivische Darstellung einer erfindungsgemäßen Vorrichtung mit Drehring als Aktuator;
- Figur 4:: eine Schnittdarstellung der Vorrichtung nach Figur 3.

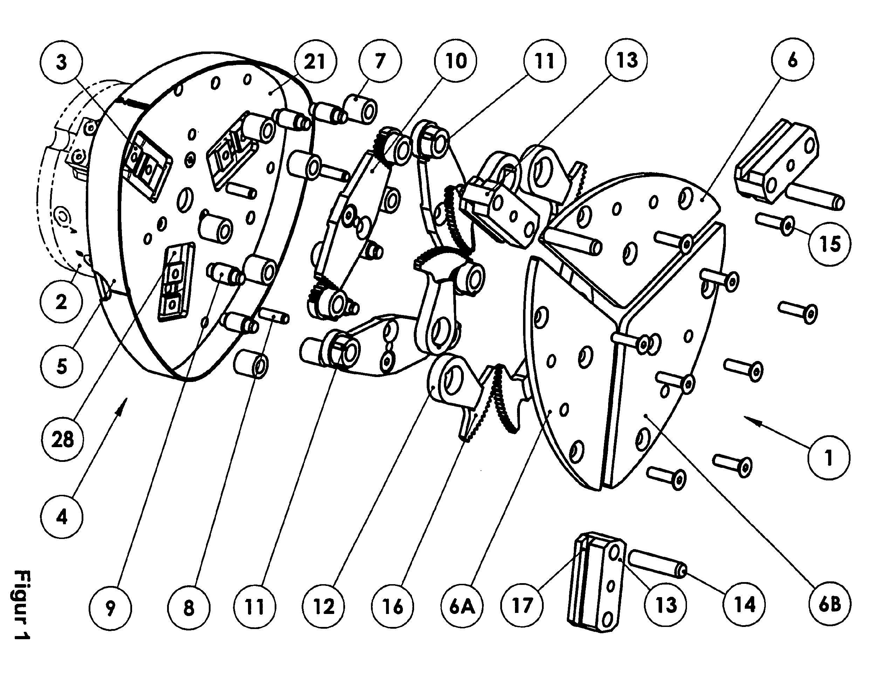

In Figur 1 ist eine perspektivische Explosions-Darstellung einer Vorrichtung 1 zum Spannen von Werkstücken dargestellt, welche ein Gehäuse 4, eine Grundplatte 21, eine Gehäusewand 5 und Deckplatten 6, 6A und 6B umfasst.

Die Vorrichtung 1 ist in der hier dargestellten Ausführungsform der Figur 1 zur Befestigung auf einem vorhandenen Spannfutter 2 einer Maschine vorgesehen.

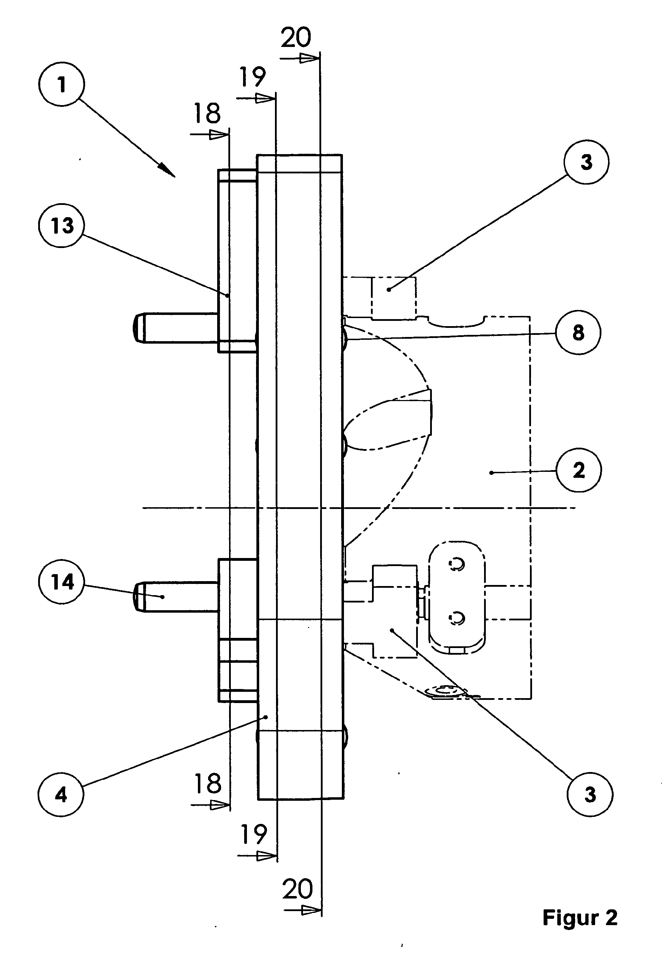

Die im Folgenden erwähnten Ebenen sind der Figur 2 besser zu entnehmen.

Die Grundplatte 21 weist auf ihrer zum vorhandenen Spannfutter 2 gerichteten Oberfläche Durchbrüche 28 auf, die zur Aufnahme einer linearen Hubbewegung der im bestehenden Spannfutter 2 verschiebbar angeordneten Spannfutterbacken 3 vorgesehen sind. An den Spanfutterbacken 3 des Spanfutters 2 wird jeweils ein Doppelzahnschieber 10 mit entsprechenden Befestigungsmitteln (nicht dargestellt) befestigt, wobei der Doppelzahnschieber 10 in einer zweiten Innenebene 20 des Gehäuses 4 angeordnet ist und die lineare Bewegung der Spannfutterbacke 3 an nachfolgende Bewegungselemente der Vorrichtung 1 überträgt. Der Doppelzahnschieber 10 weist auf der Stirnfläche seiner beiden Enden jeweils eine Linearverzahnung 17 auf, wobei die Linearverzahnung 17 jeweils mit einer Verzahnung einer Zahnradwelle 11 im Eingriff steht.

Die Zahnradwelle 11 ist mittels eines Wellenstiftes 9 auf der Oberfläche der Grundplatte 21 des Gehäuses 4 drehbar gelagert, wodurch die Verzahnung der Zahnradwelle 11 mit der Linearverzahnung 17 des Doppelzahnschiebers 10 in der zweiten Innenebene 20 des Gehäuses 4 im Eingriff steht. Die Zahnradwelle 11 weist an dem zahnfreien Ende einen Wellenabschnitt auf, welcher im Drehpunkt eines Zahnhebels 12 mit diesem im Eingriff steht. Der Wellenabschnitt der Zahnradwelle 11 ist zusammen mit dem Zahnhebel 12 in einer ersten Innenebene 19 des Gehäuses 4 angeordnet. Der Zahnhebel 12 weist eine seinem Drehpunkt gegenüberliegende Verzahnung auf, welche als Zahnkranzsegment 16 in der ersten Innenebene 19 des Gehäuses 4 im kämmenden Eingriff mit einer Linearverzahnung 17 eines Spannmittelschlittens 13 steht.

Ausgehend von einer Linearbewegung der Spannfutterbacken 3 des vorhandenen Spanfutters 2 führt der Doppelzahnschieber 10 eine den Spannfutterbacken 3 gleichgerichtete Linearbewegung aus. Auf Grund der seitlich am Doppelzahnschieber 10 angeordneten Linearverzahnungen 17, die jeweils im Eingriff mit einer Zahnradwelle 11 stehen, wird die Linearbewegung des Doppelzahnschiebers 10 in eine Drehbewegung gewandelt. Die Zahnradwelle 11 überträgt ihre Drehbewegung auf den Zahnhebel 12, wobei das dem Drehpunkt des Zahnhebels 12 gegenüberliegende Zahnkranzsegment 16 eine Drehbewegung im Abstand zum Drehpunkt ausführt. Vorzugsweise sind in der ersten Innenebene 19 des Gehäuses 4 auf jedem Doppelzahnschieber 10 zwei Zahnhebel 12 angeordnet, die mit den sich gegenüberliegend angeordneten Linearverzahnungen 17 des Spannmittelschlittens 13 im Eingriff stehen.

Die Deckplatten 6, 6A und 6B des Gehäuses 4 sind als segmentförmige Deckplatten 6, 6A, 6B ausgebildet und werden über entsprechende Distanzhülsen 7 in einem Abstand zur Grundplatte 21 mittels Befestigungsmitteln 15 befestigt. Zwischen den angeordneten Deckplatten 6, 6A und 6B bilden sich Schlitze, die von den Spannmittelschlitten 13 durchgriffen sind.

Der obere Bereich eines Spannmittelschlittens 13, welcher die Deckplatte 6, 6A und 6B durchragt, ist mit einem weiteren Spannmittel 14 bestückbar, beispielsweise in Form eines Zylinderstiftes, wobei die Position des Spannmittels 14 auf dem Spannmittelschlitten 13 variabel ist. Der über die Deckplatte 6, 6A und 6B durchragende Bereich des Spannmittelschlittens 13 bildet mit den Spannmitteln 14 eine erste Außenebene 18 des Gehäuses 4.

In der ersten Außenebene 18 des Gehäuses 4 erfolgt der Spannvorgang eines Werkstückes auf einer Maschine.

Die Bewegung des Doppelzahnschiebers 10 erzeugt eine vergrößerte Bewegung des Spannmittels 14 aufgrund der unterschiedlichen Anzahl der Zähne der Zahnradwelle 11 gegenüber dem Zahnkranzsegment 16 des Zahnhebels 12 und der Hebellänge. In der dargestellten Ausführungsform nach Figur 1, ist der Doppelzahnschieber 10 als Aktuator der Vorrichtung 1 vorgesehen, welcher die lineare Bewegung der Spannfutterbacken 3 eines vorhandenen Spannfutters 2 über die nachfolgenden Bewegungselemente in der Vorrichtung 1 auf die Spannmittelschlitten 13 überträgt.

In Figur 2 ist eine Seitenansicht einer erfindungsgemäßen Vorrichtung 1 nach Figur 1 dargestellt, welche ein Gehäuse 4 umfasst, dass an einem vorhandenen Spannfutter 2 befestigt ist.

Aufgrund der Anordnung der erforderlichen Bewegungselemente in unterschiedlichen Ebenen des Gehäuses 4 ist die Vorrichtung 1 in einem großen Spannbereich zum schnellen Spannen von Werkstücken auf einer Maschine einsetzbar und trotzdem kompakt.

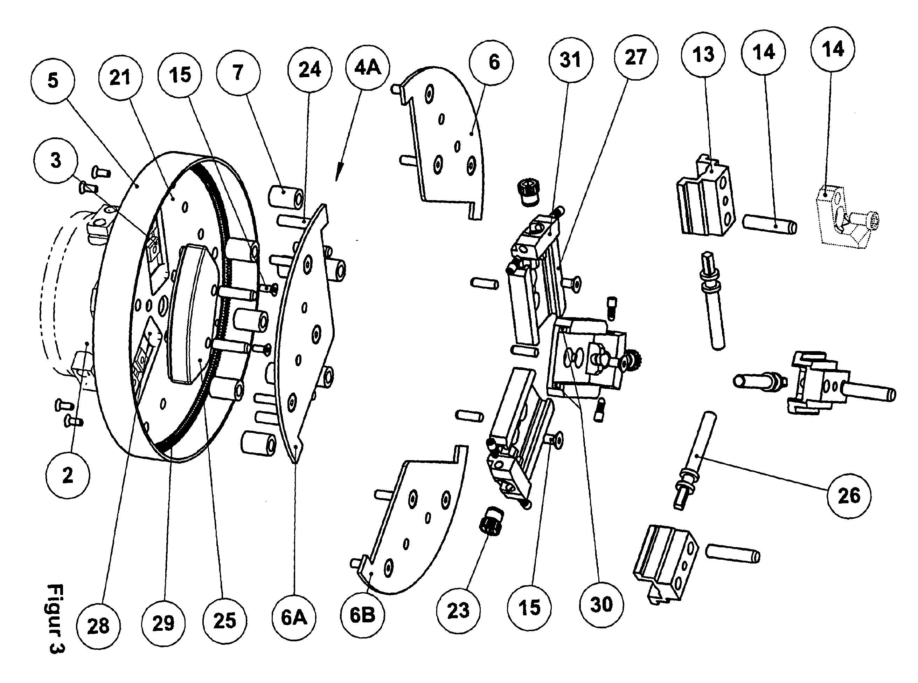

In Figur 3 ist eine weitere Ausführungsform einer Vorrichtung 1 gezeigt, wobei die im Gehäuse 4A angeordnete Bewegungsmechanik zur verbesserten Darstellung außerhalb der Deckplatten 6, 6A, 6B dargestellt ist.

Im Unterschied zur Ausführungsform gemäß Figur 1 ist der Aktuator in der Ausführungsform nach Figur 3 als Drehring 5A ausgebildet, welcher als außen laufender Zahnkranz 29 mit der als Drehring 5A ausgebildeten Gehäusewand 5 verbunden ist, wobei der Zahnkranz 29 zusammen mit dem Drehring 5 gegenüber der Grundplatte 21 drehbar ist. Das Gehäuse 4A ist in dem dargestellten Ausführungsbeispiel der Figur 3 durch entsprechende Befestigungsmittel auf einem bestehenden Spannfutter 2 einer Maschine befestigt. Die Grundplatte 21 weist im Bereich der Spannfutterbacken 3 jeweils einen Durchbruch 28 auf, welcher zur Aufnahme der Spannfutterbacken 3 des bestehenden Spannfutters 2 vorgesehen ist.

Die Spannfutterbacken 3 sind mit jeweils einer Schlittenführung 27 über entsprechende Befestigungsmittel verbunden, wobei die Spannfutterbacken 3 mit den daran befestigten Schlittenführungen 27 während des Spannvorgangs eines Werkstückes auf eine ortsfeste Position eingestellt sind.

Die Schlittenführung 27 umfasst zwei sich gegenüberliegend angeordnete Führungsnuten 30, welche eine Führung der Spannmittelschlitten 13 vorsehen. An der zum Drehring 5A gerichteten Stirnfläche der Schlittenführung 27 ist ein Lagerbock 31 mit einer Lagerbuchse zur drehenden Lagerung einer Gewindestange 26 angeordnet.

Die Gewindestange 26 ist an dem zum Drehring 5A gerichteten Ende mit einem Zahnrad 23 verbunden, welches im kämmenden Eingriff mit dem Zahnkranz 29 steht.

Ausgehend von einer Drehbewegung des Drehrings 5A überträgt der Zahnkranz 29 eine Drehbewegung auf das Zahnrad 23, welches wiederum eine Drehbewegung auf die Gewindestange 26 überträgt.

Die Gewindestange 26 bildet zusammen mit einem im Spannmittelschlitten 13 angeordneten Gewinde (nicht dargestellt) einen Schneckenantrieb, welcher die Drehbewegung der Gewindestange 26 in eine lineare Bewegung des Spannmittelschlittens 13 wandelt.

Der Spannmittelschlitten 13 ist mit einem Spannmittel 14 verbunden, welches beispielsweise in Form eines Zylinderstiftes oder einer Spannbacke ausgebildet sein kann. Der Spannmittelschlitten 13 ragt teilweise durch die Deckplatten 6, 6A und 6B des Gehäuses 4A in die erste Außenebene 18A des Gehäuses 4A, in welcher der Spannvorgang eines Werkstückes durch die lineare Bewegung der Spannmittelschlitten 13 erfolgt.

Die Deckplatten 6, 6A, 6B werden mittels Distanzhülsen 7 beabstandet zur Grundplatte 21 angeordnet, wobei die segmentartig ausgebildeten Grundplatten 6, 6A, 6B mittels Befestigungsmittel befestigt sind.

Der Drehring 5A kann durch eine manuelle Drehung (per Hand) gedreht werden, wodurch der mit dem Drehring 5A verbundene Zahnkranz 29 in der zweiten Innenebene 20A des Gehäuses 4A eine Drehbewegung ausführt. Das Drehen des Zahnkranzes 29 erzeugt eine Drehbewegung des Zahnrades 23 in der ersten Innenebene 19A des Gehäuses 4A. Durch die Drehbewegung des Zahnrades 23 wird die im Lagerbock 31 drehend gelagerte Gewindestange 26 gedreht, wodurch der Spannmittelschlitten 13 aufgrund eines darin angeordneten Gewindes in den Führungsnuten 30 der Schlittenführung 27 linear bewegt wird (Schneckenantrieb).

Es ist denkbar, dass ein Antrieb des Drehrings 5A mittels eines Motors 25, vorzugsweise mit einem Wegmesssystem erfolgt, welcher eine kontinuierliche, automatische Drehbewegung des Drehrings 5A ausführt.

Eine Bewegung des Drehrings 5A um eine Drehstrecke erzeugt eine Bewegung des Spannmittels 14 um eine Linearstrecke, welche je nach Ganghöhe der Gewindestange 26 eine Untersetzung bzw. eine Übersetzung bereitstellt.

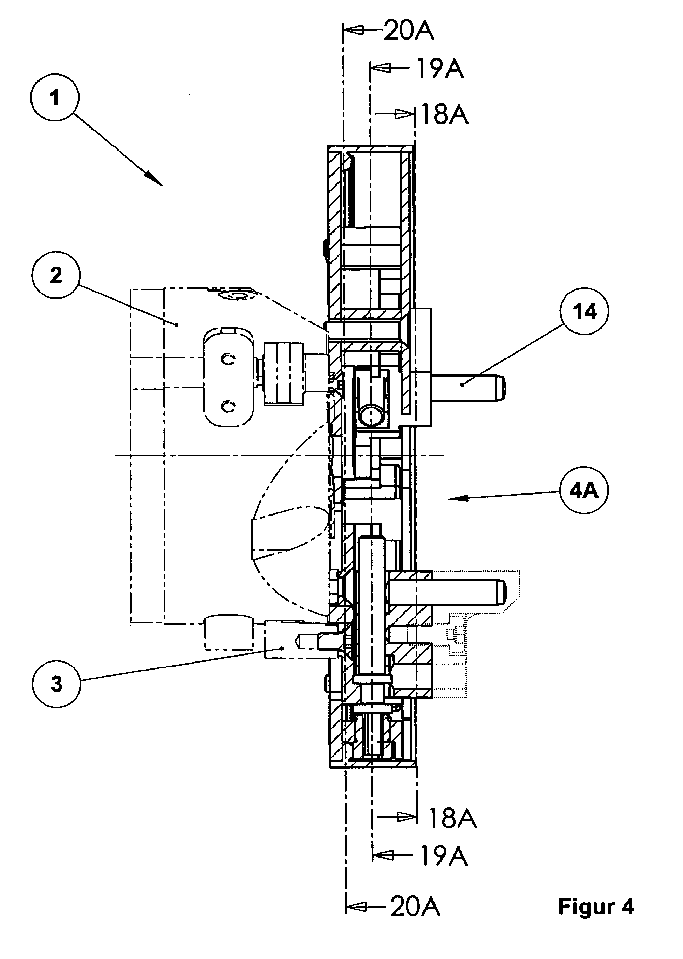

In Figur 4 ist eine Schnittdarstellung einer Vorrichtung 1 nach Figur 3 dargestellt, wobei der Aktuator in der vorliegenden Ausführungsform als Drehring 5A ausgebildet ist. Innerhalb des Gehäuses 4A führen die entsprechenden Bewegungselemente eine Übertragung der Bewegung aus, ausgehend von dem Zahnkranz 29 in der zweiten Innenebene 20A, welcher eine Drehbewegung auf Zahnrad 23 in der ersten Innenebene 19A des Gehäuses 4A überträgt. Die mit dem Zahnrad 23 in der zweiten Innenebene 20A in Verbindung stehende Gewindestange 26 überträgt eine Drehbewegung auf den Spannmittelschlitten 13.

Die Erfindung ist jedoch nicht auf die dargestellten Ausführungsformen beschränkt, sie umfasst vielmehr all diejenigen Ausgestaltungen, die vom erfindungsgemäßen Gedanken Gebrauch machen.

### Bezugszeichenliste:

- 1.: Vorrichtung
- 2.: Spannfutter
- 3.: Spannfutterbacke
- 4.: Gehäuse
- 4A: Gehäuse
- 5.: Gehäusewand
- 5A.: Drehring
- 6.: Deckplatte
- 6A.: Deckplatte
- 6B.: Deckplatte
- 7.: Distanzhülse
- 8.: Zylinderstift
- 9.: Wellenstift
- 10.: Doppelzahnschieber (Aktuator)
- 11.: Zahnradwelle
- 12.: Zahnhebel
- 13.: Spannmittelschlitten
- 14.: Spannmittel
- 15.: Befestigungsmittel (Gewindeschraube)
- 16.: Zahnkranzsegment
- 17.: Linearverzahnung
- 18.: erste Außenebene
- 18A.: erste Aüßenebene
- 19.: erste Innenebene
- 19A: erste Innenebene
- 20.: zweite Innenebene
- 20A.: zweite Innenebene
- 21.: Grundplatte
- 22.: nicht belegt
- 23.: Zahnrad
- 24.: Gewindehülse
- 25.: Motor
- 26.: Gewindestange
- 27.: Schlittenführung
- 28.: Durchbruch
- 29.: Zahnkranz
- 30.: Führungsnut
- 31.: Lagerbock

## Patentansprüche

1. Vorrichtung (1) zum Spannen von Werkstücken zur Huberweiterung für ein bestehendes Spannfutter (2) auf einer Maschine, umfassend ein Gehäuse (4, 4A) zur Anordnung eines Getriebes, und mindestens zwei Spannmittel (14), die mittels des Getriebes eine lineare, auf einen Mittelpunkt gerichtete Bewegung ausführen, **dadurch gekennzeichnet, dass** die Vorrichtung (1) eine erste Außenebene (18, 18A) außerhalb des Gehäuses (4, 4A) und eine erste und zweite Innenebene (19, 19A, 20, 20A) innerhalb des Gehäuses (4, 4A) umfasst, wobei in der ersten Außenebene (18, 18A) mindestens zwei Spannmittelschlitten (13) vorgesehen sind, welche eine Verzahnung oder ein Gewinde aufweisen und in die erste Innenebene (19, 19A) hineinragen, und welche in der ersten Innenebene (19, 19A) mit jeweils mindestens einem angeordneten Zahnhebel (12) oder einer Gewindestange (26) im Eingriff stehen, wobei der mindestens eine Zahnhebel (12) oder die Gewindestange (26) wiederum mit jeweils einer Zahnradwelle (11) oder einem Zahnkranz (29) in der zweiten, darunter liegenden Innenebene (20, 20A) im Eingriff steht, und wobei eine Betätigung der Zahnradwelle (11) oder des Zahnkranzes (29) zur Bewegung der Spannmittel (14) in der zweiten Innenebene (20A) mittels mindestens eines Aktuators erfolgt.

2. Vorrichtung (1) nach Anspruch 1, **dadurch gekennzeichnet, dass** das Gehäuse (4) Durchbrüche (28) auf der Rückseite in Richtung des bestehenden Spannfutters (2), insbesondere zur Betätigung des mindestens einen Aktuators aufweist, wobei vorzugsweise die Durchbrüche (28) für eine Aufnahme einer linearen Hubbewegung des bestehenden Spannfutters (2) vorgesehen sind.

3. Vorrichtung (1) nach einem der vorhergehenden Ansprüche, **dadurch gekennzeichnet, dass** der Aktuator als Doppelzahnschieber (10) und/oder als Drehring (5A) ausgebildet ist.

4. Vorrichtung (1) nach Anspruch 3, **dadurch gekennzeichnet, dass** der Doppelzahnschieber (10) eine lineare Bewegung ausführt und die Zahnradwelle (11), vorzugsweise zwei Zahnradwellen (11) dreht, wobei jede Zahnradwelle (11) drehfest mit einem Zahnhebel (12) an einem Drehpunkt verbunden ist und diesen schwenkt.

5. Vorrichtung (1) nach einem der vorhergehenden Ansprüche, **dadurch gekennzeichnet, dass** der als Linearschlitten ausgebildete Spannmittelschlitten (13) eine Linearverzahnung (17) umfasst, welche mit einer an dem Zahnhebel (12) angeordneten, einem Drehpunkt gegenüberliegenden Verzahnung (17), vorzugsweise mit zwei Zahnhebeln (12) symmetrisch im Eingriff steht.

6. Vorrichtung (1) nach einem der vorhergehenden Ansprüche, **dadurch gekennzeichnet, dass** das Spannmittel (14) zur Ausübung einer Spannkraft auf ein zu haltendes Teil am Spannmittelschlitten (13) angeordnet ist.

7. Vorrichtung (1) nach einem der vorhergehenden Ansprüche, **dadurch gekennzeichnet dass,** die Vorrichtung (1) an das bestehende Spannfutter (2) anbaubar bzw. in die bestehende Spannmechanik integrierbar ist.

8. Vorrichtung (1) nach einem der vorhergehenden Ansprüche, **dadurch gekennzeichnet, dass** die Vorrichtung (1) eine Grundplatte (21) umfasst, auf welcher der außen laufende Zahnkranz (29) drehbar angeordnet ist.

9. Vorrichtung (1) nach einem der vorhergehenden Ansprüche, **dadurch gekennzeichnet, dass** der Spannmittelschlitten (13) mit der Gewindestange (26) in der ersten Innenebene (19A) einen Schneckenantrieb bildet, wobei das Ende der Gewindestange (26) mit einem Zahnrad (23) drehfest verbunden ist, welches mit dem Zahnkranz (29) in der zweiten Innenebene (20A) im Eingriff steht.

10. Vorrichtung (1) nach Anspruch 3, **dadurch gekennzeichnet, dass** eine Bewegung des Doppelzahnschiebers (10) um eine Strecke A eine vergrößerte Bewegung des Spannmittels (14) um eine Strecke B>A erzeugt.

11. Vorrichtung (1) nach Anspruch 3, **dadurch gekennzeichnet, dass** der Drehring (5A) mittels eines Antriebes oder manuell drehbar ist und eine Linearbewegung der Spannmittelschlitten (13) erzeugt.

12. Vorrichtung (1) nach Anspruch 11, **dadurch gekennzeichnet, dass** eine Bewegung des Drehrings (5A) um eine Drehstrecke C eine Bewegung des Spannmittels (14) um eine Linearstrecke D erzeugt, wobei je nach Ganghöhe der Gewindestange (26) eine Untersetzung C>D bzw. Übersetzung D>C erfolgt.
